(19) Europäisches Patentamt
European Patent Office
Office européen des brevets

(11) **EP 4 550 460 A1**

(12) **EUROPEAN PATENT APPLICATION**
published in accordance with Art. 153(4) EPC

(43) Date of publication:
07.05.2025 Bulletin 2025/19

(21) Application number: 23831028.8

(22) Date of filing: 09.06.2023

(51) International Patent Classification (IPC):
$H01M\ 4/525^{(2010.01)}$  $H01M\ 4/13^{(2010.01)}$
$H01M\ 4/36^{(2006.01)}$  $H01M\ 4/505^{(2010.01)}$
$H01M\ 10/052^{(2010.01)}$

(52) Cooperative Patent Classification (CPC):
H01M 4/13; H01M 4/36; H01M 4/505; H01M 4/525;
H01M 10/052; Y02E 60/10

(86) International application number:
PCT/JP2023/021476

(87) International publication number:
WO 2024/004578 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 JP 2022105951

(71) Applicant: Panasonic Intellectual Property
Management Co., Ltd.
Kadoma-shi, Osaka 571-0057 (JP)

(72) Inventors:
• FUJITANI, Naoya
Kadoma-shi, Osaka 571-0057 (JP)
• AOKI, Yoshinori
Kadoma-shi, Osaka 571-0057 (JP)
• JITO, Daizo
Kadoma-shi, Osaka 571-0057 (JP)
• OGASAWARA, Takeshi
Kadoma-shi, Osaka 571-0057 (JP)

(74) Representative: Novagraaf International SA
Chemin de l'Echo 3
1213 Onex, Geneva (CH)

(54) **NON-AQUEOUS ELECTROLYTE SECONDARY BATTERY**

(57) This non-aqueous electrolyte secondary battery, which is one example of an embodiment of the present invention, comprises a positive electrode that includes a lithium-transition metal composite oxide containing Ni, Co, M1 (M1 is at least one element selected from Ca and Sr), and M2 (M2 is at least one element selected from Nb, Zr, Ti, W, Al, Mo, Fe, B, P, Mg, and Si). The lithium-transition metal composite oxide is secondary particles formed from aggregated primary particles. The average porosity of the second particles is 1-5%. The negative electrode has a coating containing M2, the coating being formed on a surface of a negative electrode mixture layer.

EP 4 550 460 A1

# Figure 1

**Description**

TECHNICAL FIELD

The present disclosure relates to a non-aqueous electrolyte secondary battery, and specifically relates to a non-aqueous electrolyte secondary battery including a lithium-transition metal composite oxide with a high Ni content as a positive electrode active material.

BACKGROUND ART

A lithium-transition metal composite oxide with a high Ni content has attracted attention in recent years as a positive electrode active material with a high energy density. For example, Patent Literature 1 discloses a positive electrode active material consisting of a lithium-transition metal composite oxide represented by the general formula $Li_xNi_{1-y-z-v-w}Co_yAl_zM1_vM2_wO_2$, wherein the element $M^1$ represents at least one selected from Mn, Ti, Y, Nb, Mo, and W, and the element $M^2$ represents at least Mg or Ca. Patent Literature 2 discloses a lithium-transition metal composite oxide containing Ni, Mn, and Co, wherein the composite oxide contains at least one selected from Mo, W, Nb, Ta, and Re.

CITATION LIST

PATENT LITERATURE

PATENT LITERATURE 1: Japanese Unexamined Patent Application Publication No. 2006-310181
PATENT LITERATURE 2: Japanese Unexamined Patent Application Publication No. 2009-289726

SUMMARY

When the lithium-transition metal composite oxide with a high Ni content as disclosed in Patent Literature 1 and 2 is used as the positive electrode active material, a large amount of $Ni^{4+}$ having high reactivity is present on particle surfaces of the composite oxide in a state with a high charge rate (SOC), and side reactions between the active material and the electrolyte tend to occur. Accordingly, a decomposed product of the electrolyte generated by the side reactions is deposited on not only the positive electrode surface but also a negative electrode surface. As a result, internal resistance of the battery increases and consequently deteriorate charge-discharge cycle characteristics.

A non-aqueous electrolyte secondary battery of an aspect of the present disclosure is a non-aqueous electrolyte secondary battery comprising: a positive electrode; a negative electrode; and a non-aqueous electrolyte, wherein the positive electrode includes a lithium-transition metal composite oxide containing Ni, Co, M1 (M1 represents at least one element selected from Ca and Sr), and M2 (M2 represents at least one element selected from Nb, Zr, Ti, W, Al, Mo, Fe, B, P, Mg, and Si), and in the lithium-transition metal composite oxide, a content rate of Ni is greater than or equal to 80 mol% relative to a total number of moles of metal elements excluding Li, a content rate of Co is less than or equal to 7 mol% relative to the total number of moles of metal elements excluding Li, a content rate of M1 is less than or equal to 1 mol% relative to the total number of moles of metal elements excluding Li, a content rate of M2 is less than or equal to 3 mol% relative to the total number of moles of metal elements excluding Li, the lithium-transition metal composite oxide is of secondary particles each formed by aggregation of a plurality of primary particles, an average porosity of the secondary particles is greater than or equal to 1% and less than or equal to 5%, and M1 is present on at least an interface between the primary particles inside the secondary particles, and the negative electrode has: a negative electrode mixture layer including a negative electrode active material; and a coating formed on a surface of the negative electrode mixture layer and containing M2, and a content rate of M2 in the negative electrode is greater than or equal to 1000 ppm and less than or equal to 10000 ppm relative to a total mass of the negative electrode mixture layer and the coating.

According to an aspect of the present disclosure, capacity deterioration with charge and discharge may be inhibited in the non-aqueous electrolyte secondary battery including the lithium-transition metal composite oxide with a high Ni content as the positive electrode active material. The non-aqueous electrolyte secondary battery of an aspect of the present disclosure has excellent cycle characteristics.

BRIEF DESCRIPTION OF DRAWING

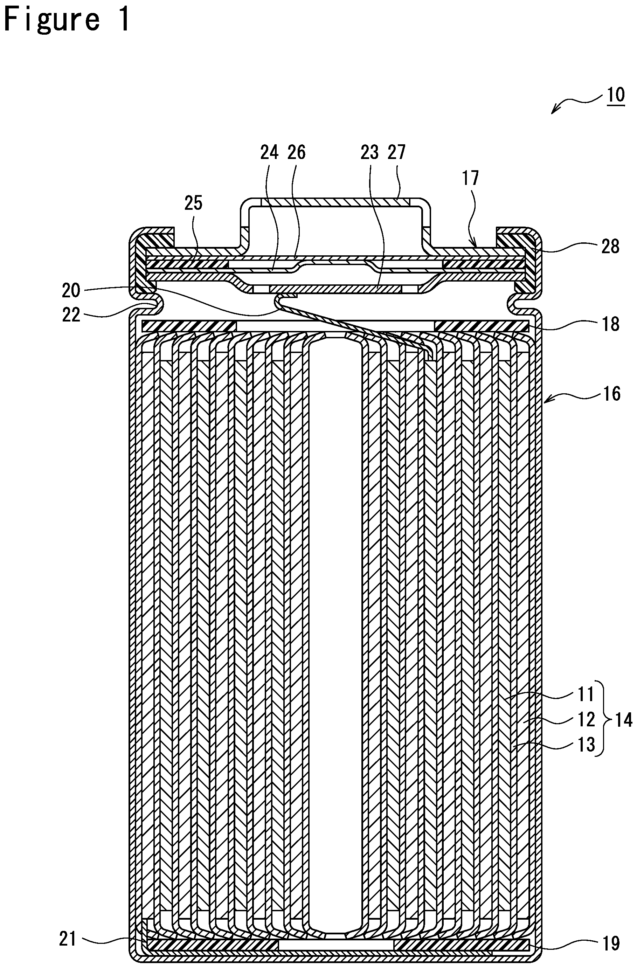

FIG. 1 is a sectional view of a non-aqueous electrolyte secondary battery of an example of an embodiment.

DESCRIPTION OF EMBODIMENT

As noted above, the lithium-transition metal composite oxide with a high Ni content tends to undergo side reactions with the electrolyte particularly in a high-SOC state. Thus, when this composite oxide is used for the positive electrode active material, it is considered that a decomposed product of the electrolyte is deposited on a positive electrode surface and a negative electrode surface, and internal resistance of the battery increases to deteriorate cycle characteristics. As a result of investigation by the present inventors, it has been found that the cycle characteristics are specifically improved by setting a predetermined amount of an element M1 to be present on interfaces of primary particles constituting the Ni-containing composite oxide and by adding predetermined amounts of an element M2 and Co into the composite oxide. In this case, it is considered that a stable protective coating is formed on both the positive electrode and the negative electrode to effectively inhibit the side reactions of the electrolyte.

The above effect becomes remarkable when an average porosity of the secondary particles of the composite oxide is greater than or equal to 1% and less than or equal to 5%. When the average porosity of the secondary particles is greater than or equal to 1% and less than or equal to 5%, the element M1 becomes easy to be present selectively on the interface between the primary particles, and as a result, the effect of inhibiting the side reactions is considered to increase. In other words, if the average porosity of the secondary particles is out of this range, the effect of improving the cycle characteristics cannot be obtained, or the improving effect becomes small.

Hereinafter, an example of embodiments of the non-aqueous electrolyte secondary battery according to the present disclosure will be described in detail with reference to the drawings. Note that the scope of the present disclosure includes selective combination of constituents of a plurality of embodiments and modified examples described hereinafter.

Hereinafter, a cylindrical battery housing a wound electrode assembly 14 in a bottomed cylindrical exterior housing can 16 will be exemplified as the non-aqueous electrolyte secondary battery, but the exterior of the battery is not limited to a cylindrical exterior housing can. The non-aqueous electrolyte secondary battery according to the present disclosure may be, for example, a rectangular battery comprising a rectangular exterior housing can, a coin-shaped battery comprising a coin-shaped exterior housing can, or a pouch battery comprising an exterior constructed of a laminate sheet including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an embodiment example. As illustrated in FIG. 1, the non-aqueous electrolyte secondary battery 10 comprises the wound electrode assembly 14, a non-aqueous electrolyte (not illustrated), and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent includes ethylene carbonate (EC), ethyl methyl carbonate (EMC), dimethyl carbonate (DMC), diethyl carbonate (DEC), and a mixed solvent thereof. The non-aqueous solvent may contain a halogen-substituted derivative in which hydrogen of these solvents is at least partially substituted with a halogen atom such as fluorine (for example, fluoroethylene carbonate and the like). For the electrolyte salt, a lithium salt such as $LiPF_6$ is used, for example. Vinylene carbonate (VC) at less than or equal to 5 mass% relative to a mass of the non-aqueous electrolyte may be added.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17, and thereby sealing inside the battery is ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the electrode assembly 14, specifically a positive electrode active material constituting the positive electrode 11, will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum, a film in which such a metal is disposed on the surface, or the like may be used. The positive electrode mixture layer includes a positive electrode active material, a binder, and a conductive agent, and is preferably provided on both surfaces of the positive electrode core except for a portion where a positive electrode lead 20 is to be connected. The positive electrode 11 may be produced by, for example, applying a positive electrode mixture slurry including the positive electrode active material, the binder, the conductive agent, and the like on the surface of the positive electrode core, and drying and then compressing the coating to form the positive electrode mixture layer on both the surfaces of the positive electrode core.

Examples of the conductive agent included in the positive electrode mixture layer may include carbon materials such as carbon black such as acetylene black and Ketjenblack, graphite, carbon nanotube (CNT), carbon nanofiber, and graphene. Examples of the binder included in the positive electrode mixture layer may include fluorine-containing resins such as polytetrafluoroethylene (PTFE) and polyvinylidene fluoride (PVdF), polyacrylonitrile (PAN), a polyimide, an acrylic resin, and a polyolefin. With any one of these resins, carboxymethylcellulose (CMC) or a salt thereof, polyethylene oxide (PEO), or the like may be used in combination.

The positive electrode 11 includes a lithium-transition metal composite oxide containing Ni, Co, M1 (M1 represents at least one element selected from Ca and Sr), M2 (M2 represents at least one element selected from Nb, Zr, Ti, W, Al, Mo, Fe, B, P, Mg, and Si), and Mn that is an optional component. Hereinafter, for convenience of description, this lithium-transition metal composite oxide is referred to as "composite oxide (Z)". The composite oxide (Z) functions as the positive electrode active material. The positive electrode active material includes the composite oxide (Z) as a main component, and may be made of substantially only the composite oxide (Z). The positive electrode active material may include a composite oxide other than the composite oxide (Z) or another compound within a range not impairing the object of the present disclosure.

The composite oxide (Z) is a composite oxide represented by the general formula $Li_aNi_bCo_cMn_aM1_eM2_fO_g$, wherein $0.8 \leq a \leq 1.2$, $0.80 \leq b < 1$, $0 \leq c \leq 0.07$, $0 \leq d \leq 0.10$, $0 < e \leq 0.01$, $0 < f \leq 0.03$, $1 \leq g \leq 2$, and $b+c+d+e+f = 1$. The composite oxide (Z) preferably has a layered structure. The composite oxide (Z) has, for example, a layered structure belonging to the space group R-3m or a layered structure belonging to the space group C2/m.

A proportion of transition metal elements present in a Li layer in the composite oxide (Z) is preferably greater than or equal to 3 mol% and less than or equal to 7 mol% relative to the total number of moles of metal elements excluding Li. In this case, the effect of improving the cycle characteristics becomes more remarkable compared with a case where the proportion of the transition metal elements present in the Li layer is out of the above range. The proportion of the transition metal elements present in the Li layer may be regulated by, for example, controlling a firing temperature described later, and generally, the higher the firing temperature, the larger the proportion. The proportion of the transition metal elements present in the Li layer is obtained by Rietveld analysis result of an X-ray diffraction pattern by X-ray diffraction measurement of the lithium-transition metal composite oxide of the present embodiment.

The X-ray diffraction pattern is obtained by a powder X-ray diffraction method using a powder X-ray diffraction apparatus (manufactured by Rigaku Corporation, product name "RINT-TTR", radiation source Cu-K$\alpha$) under the following conditions.

Measuring Range: 15-120°
Scanning Rate: 4°/min
Analyzing Range: 30-120°
Background: B-spline
Profile Function: Split pseudo-Voigt function
Restricting Condition; Li(3a) + Ni(3a) = 1

$$\mathrm{Ni}(3a) + \mathrm{Ni}(3b) = y$$

y represents the proportion of Ni relative to a total amount of metal elements in the lithium-transition metal composite oxide excluding Li ($0.90 \leq y < 1.00$).
ICSD No.: 98-009-4814

For the Rietveld analysis of the X-ray diffraction pattern, PDXL2 (manufactured by Rigaku Corporation), which is a software for Rietveld analysis, is used.

The composite oxide (Z) is of secondary particles each formed by aggregation of a plurality of primary particles. A median diameter (D50) of the composite oxide (Z) on a volumetric basis is, for example, greater than or equal to 3 $\mu$m and less than or equal to 30 $\mu$m, and preferably greater than or equal to 5 $\mu$m and less than or equal to 25 $\mu$m. Since the composite oxide (Z) is of the secondary particles each formed by aggregation of the primary particles, the D50 of the composite oxide means D50 of the secondary particles. The D50 means a particle diameter at which a cumulative frequency is 50% from a smaller particle diameter side in a particle size distribution on a volumetric basis. The particle size distribution of the composite oxide (Z) may be measured by using a laser diffraction particle size distribution measuring device (for example, MT3000II, manufactured by MicrotracBEL Corp.) with water as a dispersion medium.

An average particle diameter of the primary particles constituting the composite oxide (Z) is, for example, greater than or equal to 0.05 $\mu$m and less than or equal to 1 $\mu$m. The average particle diameter of the primary particles is calculated by averaging diameters of circumscribed circles of the primary particles extracted by analyzing a scanning electron microscope (SEM) image of the cross section of the secondary particles.

The composite oxide (Z) contains Ni at greater than or equal to 80 mol% relative to a total number of moles of metal elements excluding Li. Setting the content rate of Ni to greater than or equal to 80 mol% yields the battery with a high energy density. The content rate of Ni may be greater than or equal to 85 mol%, or may be greater than or equal to 90 mol% relative to the total number of moles of metal elements excluding Li. An upper limit of the content rate of Ni is, for example, 95 mol%. Note that Ni contained in the composite oxide (Z) becomes, for example, a Ni source of the coating to be formed on the negative electrode surface, and a part thereof is eluted by charge and discharge to be deposited on the negative electrode surface and contained in the coating on the negative electrode 12.

As noted above, the composite oxide (Z) contains Co as an essential element. In the composite oxide (Z), a content rate of Co is less than or equal to 7 mol% relative to the total number of moles of metal elements excluding Li. Adding a small amount of Co into the composite oxide (Z) may effectively improve the cycle characteristics. Note that adding greater than 7 mol% of Co does not change or rather deteriorates the cycle characteristics. For example, adding greater than 7 mol% of Co leads to defects such as decrease in capacity and increase in cost. Co is effective even with an extremely small amount, but a lower limit of the content rate is preferably 2 mol%. The content rate of Co is preferably greater than or equal to 2 mol% and less than or equal to 7 mol%, and more preferably greater than or equal to 3 mol% and less than or equal to 6 mol% relative to the total number of moles of metal elements excluding Li.

The composite oxide (Z) further contains M1 and M2 as essential components. As noted above, M1 represents at least one element selected from Ca and Sr, and M2 represents at least one element selected from Nb, Zr, Ti, W, Al, and Si. It is considered that adding small amounts of M1 and M2 into the composite oxide (Z) forms a stable protective coating on both the positive electrode 11 and the negative electrode 12 to effectively inhibit the side reactions of the electrolyte, and the cycle characteristics may be effectively improved. Note that adding only one of M1 and M2 cannot yield the sufficient effect.

In the composite oxide (Z), a content rate of M1 is less than or equal to 1 mol% relative to the total number of moles of metal elements excluding Li. Adding greater than 1 mol% of M1 does not change or rather deteriorates the cycle characteristics. Adding greater than 1 mol% of M1 leads to defects such as, for example, increase in resistance and decrease in charge capacity.

The content rate of M1 is preferably lower than content rates of Co and M2. In this case, the effect of improving the cycle characteristics becomes more remarkable. M1 is effective even with an extremely small amount, and a lower limit of the content rate is preferably 0.05 mol%. The content rate of M1 is preferably greater than or equal to 0.05 mol% and less than or equal to 1 mol%, and more preferably greater than or equal to 0.1 mol% and less than or equal to 0.5 mol% relative to the total number of moles of metal elements excluding Li. When Ca and Sr are added as M1, a total of these content rates is preferably within this range.

M1 is present on at least an interface between the primary particles inside the secondary particles of the composite oxide (Z). In this case, the effect of inhibiting the side reactions is considered to be remarkable, and the cycle characteristics may be effectively improved. M1 present on the interface between the primary particles may be confirmed by transmission microscope - energy dispersive X-ray spectrometry (TEM-EDX). Although a detail will be described later, a case where the average porosity of the secondary particles is greater than or equal to 1% and less than or equal to 5% facilitates selective presence of M1 on the interface between the primary particles. M1 is present in a state of evenly dispersed on the interface between the primary particles, for example. Note that M1 may adhere to surfaces of the secondary particles.

In the composite oxide (Z), a content rate of M2 is less than or equal to 3 mol% relative to the total number of moles of metal elements excluding Li. Adding greater than 3 mol% of M2 does not change or rather deteriorates the cycle characteristics. Adding greater than 3 mol% of M2 leads to defects such as, for example, increase in resistance and decrease in a charge capacity. Note that M2 contained in the composite oxide (Z) is an M2 source of the coating to be formed on the negative electrode surface, and a part thereof is eluted by charge and discharge to be deposited on the negative electrode surface and contained in the coating on the negative electrode 12.

The content rate of M2 is lower than the content rate of Co and higher than the content rate of M1, for example. In this case, the effect of improving the cycle characteristics becomes more remarkable. M2 is effective even with an extremely small amount, and a lower limit of the content rate is preferably 0.1 mol%. The content rate of M2 is preferably greater than or equal to 0.1 mol% and less than or equal to 3 mol%, and more preferably greater than or equal to 0.3 mol% and less than or equal to 2 mol% relative to the total number of moles of metal elements excluding Li. When greater than or equal to two elements are added as M2, a total of these content rates is preferably within this range.

The composite oxide (Z) preferably contains at least one element selected from Nb, Zr, Ti, and W as M2. Among these, the composite oxide (Z) more preferably contains at least Nb or W, and particularly preferably contains Nb. Examples of the suitable combination of M2 include Nb and W, Nb and Ti, Nb and Zr, W and Ti, and W and Zr. A content rate of Nb is particularly preferably greater than or equal to 0.35 mol% and less than or equal to 1 mol% relative to the total number of moles of metal elements excluding Li. When the content rate of Nb is within the above range, the effect of improving the cycle characteristics becomes more remarkable.

The presence state of M2 in the composite oxide (Z) is not particularly limited, and M2 forms a solid solution with other metal elements such as Ni, for example. Nb is particularly preferably forms the solid solution. It is preferable that greater than or equal to 70% of Nb contained in the composite oxide (Z) form the solid solution in the composite oxide (Z), and substantially all Nb particularly preferably forms the solid solution. An amount of the solid solution of M2 may be determined by inductively coupled plasma atomic emission spectrometry (ICP-AES) or energy dispersive X-ray spectrometry (EDS). W may form a solid solution with other metal elements such as Ni similarly to Nb, or may be present on the surfaces of the primary particles similarly to M1.

The composite oxide (Z) may contain an element other than Li, Ni, Co, M1, and M2. Examples of the metal element may include Mn, Cu, Na, K, and Ba. Among these, the composite oxide (Z) preferably contains Mn. When the composite oxide (Z) contains Mn, a content rate of Mn is preferably greater than or equal to 1 mol% and less than or equal to 10 mol% relative to the total number of moles of metal elements excluding Li. The content rate of Mn is higher than the content rates of M1 and M2, and may be similar to the content rate of Co.

Content rates of the elements constituting the composite oxide (Z) may be measured by an inductively coupled plasma atomic emission spectrometer (ICP-AES), an electron beam micro analyzer (EPMA), energy dispersive X-ray analyzer (EDX), or the like.

As noted above, the average porosity of the secondary particles of the composite oxide (Z) is greater than or equal to 1% and less than or equal to 5%. The average porosity within this range is considered to facilitate selective presence of M1 on the interface between the primary particles to increase the effect of inhibiting the side reactions. Accordingly, the cycle characteristics are effectively improved. If the average porosity is less than 1%, M1 easily inserts inside the primary particles to fail to obtain the effect of improving the cycle characteristics. On the other hand, if the average porosity is greater than 5%, a reaction area with the electrolyte becomes excessively large to deteriorate the cycle characteristics. In addition to the average value of the porosity, a center value thereof is also preferably greater than or equal to 1% and less than or equal to 5%.

The porosity of the secondary particles is a proportion of an area of the pores in the cross section of the secondary particles, and calculated by the formula: (the area of the pores / the sectional area of the secondary particles) $\times$ 100. The porosity may be calculated from a total area of pores included in the entire cross section of the secondary particles or

EP 4 550 460 A1

included per predetermined area.

The porosity is determined by analyzing the SEM image of the cross section of the secondary particles. Regions of the primary particles and the pores are extracted by appropriately selecting an image analysis software such as Image J and Avizo-Materials Science. The regions of the primary particles and the pores are extracted by subjecting the SEM image to noise removal such as a non-local means filter and BM3D, detecting an edge, and overlapping and applying a threshold of brightness with a Marker Based-Watershed method. A region having a high-brightness region as a center detected by the Watershed method is defined as the primary particle, and a low-brightness region is defined as the pores.

The secondary particles of the composite oxide (Z) include many small pores. Most or all of the pores may be formed in gaps between the primary particles. The average porosity of the secondary particles is more preferably greater than or equal to 1.2 and less than or equal to 4.5, and particularly preferably greater than or equal to 1.5 and less than or equal to 3.5. The porosity of the secondary particles may be regulated within the target range by, for example, controlling a firing condition described later.

The composite oxide (Z) may be synthesized by, for example, mixing and firing a transition metal oxide containing Ni, Co, Mn, and the like, an M1 raw material, an M2 raw material, and a Li raw material such as lithium hydroxide (LiOH). The composite oxide (Z) may also be synthesized by mixing and firing the transition metal oxide containing Ni, Co, Mn, and the like, the M1 raw material, and the M2 raw material to synthesize a composite oxide containing Ni, Co, Mn, M1, and M2, and then adding the Li raw material and firing the mixture again.

The firing step of the composite oxide (Z) includes, for example: a first step of obtaining a composite oxide containing Ni and the like; a second step of mixing the composite oxide and a lithium compound to obtain a mixture; and a third step of firing the mixture. A compound containing M1 and a compound containing M2 are preferably added in the second step. M2 may also be added in the first step.

In the first step, for example, with stirring a solution of metal salts containing Ni, Mn, and the like, a solution of an alkali such as sodium hydroxide is added dropwise in order to adjust a pH on the alkaline side (for example, greater than or equal to 8.5 and less than or equal to 12.5) to precipitate (coprecipitate) a composite hydroxide containing Ni, Mn, and the like. This composite hydroxide is fired to obtain the composite oxide containing Ni, Mn, and the like. The firing temperature is not particularly limited, and an example thereof is greater than or equal to 250°C and less than or equal to 600°C.

In the second step, for example, the composite oxide obtained in the first step, the lithium compound, the compound containing M1, and the compound containing M2 are mixed. Examples of the lithium compound include $Li_2CO_3$, LiOH, $Li_2O_2$, $Li_2O$, $LiNO_3$, $LiNO_2$, $Li_2SO_4$, $LiOH·H_2O$, LiH, and LiF. The composite oxide and the lithium compound are preferably mixed at a mole ratio between a total amount of the metal elements excluding Li and Li of, for example, greater than or equal to 1:0.98 and less than or equal to 1:1.12.

The step of firing the mixture in the third step is a multi-stage firing step including at least, for example: a first firing step of firing the mixture under an oxygen flow at greater than or equal to 450°C and less than or equal to 680°C; and a second firing step of firing the fired product obtained in the first firing step under an oxygen flow at a temperature of greater than 680°C. In the first firing step, the temperature is raised at a first temperature-raising rate, which is greater than or equal to 0.2°C/min and less than or equal to 4.5°C/min, to a first set temperature of less than or equal to 680°C. In the second firing step, the temperature is raised at a second temperature-raising rate, which is greater than or equal to 1°C/min and less than or equal to 3.5°C/min, to a second set temperature of less than or equal to 900°C. In the second firing step, setting the temperature-raising rate to be less than 1°C undergoes crystal growth of the primary particles to decrease pores inside the secondary particles, and thereby fails to obtain the composite oxide (Z) having the average porosity satisfying the prescribed value. A plurality of the first and second temperature-raising rates may be set within the above ranges in each of the predetermined temperature regions.

A holding time at the first set temperature in the first firing step is preferably less than or equal to 5 hours, and more preferably less than or equal to 3 hours. The holding time at the first set temperature refers to a time of keeping the first set temperature after the temperature reaches the first set temperature, and the holding time may be zero. A holding time at the second set temperature in the second firing step is preferably greater than or equal to 1 hour and less than or equal to 10 hours, and more preferably greater than or equal to 1 hour and less than or equal to 5 hours. The holding time at the second set temperature refers to a time of keeping the third set temperature after the temperature reaches the second set temperature. When the second setting time is set to be greater than 10 hours, the crystal growth of the primary particles also proceeds to decrease the pores inside the secondary particles, and thereby the composite oxide (Z) having the average porosity satisfying the prescribed value cannot be obtained. The mixture is fired in an oxygen flow with an oxygen concentration of, for example, greater than or equal to 60%, and performed with a flow rate of the oxygen flow of greater than or equal to 0.2 mL/min and less than or equal to 4 mL/min per 10 $cm^3$ of the firing furnace, and greater than or equal to 0.3 L/min per kilogram of the mixture.

Examples of the M1 raw material include $Ca(OH)_2$, $CaHPO_4$, $Ca(H_2PO_4)_2$, $Ca_3(PO_4)_2$, CaO, $CaCO_3$, $CaSO_4$, $Ca(NO_3)_2$, $CaCl_2$, $CaAlO_4$, $Sr(OH)_2$, $Sr(OH)_2·8H_2O$, SrO, $SrCO_3$, $SrSO_4$, and $Sr(NO_3)_2$, and the M1 raw material may be used after drying and dehydration in order to reduce an amount of water generated in the firing. These compounds may be crushed or the like so that the particle diameter is greater than or equal to 0.1 $\mu$m and less than or equal to 20 $\mu$m. When M2

is Nb, examples of the M2 raw material include $Nb_2O_5$ and $Nb_2O_5 \cdot nH_2O$, $WO_3$, $Li_2WO_4$, $TiO_2$, $Ti(OH)_4$, $ZrO_2$, $Al(OH)_3$, $Al_2O_3$, $Al(NO_3)_3$, $MoO_3$, $Li_2MoO_4$, $SiO$, $SiO_2$, $B_2O_3$, $LiBO_3$, $Li_2B_4O_7$, $P_2O_5$, $MgO$, $Mg(OH)_2$, and $Fe_2O_3$.

The fired product obtained in the third step is washed with water to remove an impurity, and the fired product washed with water is heated and dried. As necessary, the fired product may be crushed, classified, or the like to regulate D50 of the positive electrode active material within a target range. The fired product washed with water may be dried at a temperature of less than 100°C. An example of the suitable drying temperature is greater than or equal to 250°C and less than or equal to 600°C. The drying treatment may be performed any of in vacuo or in the atmosphere. An example of the drying treatment time is greater than or equal to 1 hour and less than or equal to 5 hours.

[Negative Electrode]

The positive electrode 12 has a negative electrode core and a negative electrode mixture layer formed on a surface of the negative electrode core. For the negative electrode core, a foil of a metal stable within a potential range of the negative electrode 12, such as copper, a film in which such a metal is disposed on the surface, or the like may be used. The negative electrode mixture layer includes a negative electrode active material and a binder, and is preferably provided on both surfaces of the negative electrode core except for a portion where a negative electrode lead 21 is to be connected. The negative electrode 12 may be produced by, for example, applying a negative electrode mixture slurry including the negative electrode active material, the binder, and the like on the surface of the negative electrode core, and drying and then compressing the coating to form the negative electrode mixture layer on both the surfaces of the negative electrode core.

The negative electrode mixture layer includes, generally, a carbon material that reversibly absorbs and desorbs lithium ions as the negative electrode active material. A preferable example of the carbon material is a graphite such as: a natural graphite such as flake graphite, massive graphite, or amorphous graphite; and an artificial graphite such as massive artificial graphite (MAG) or graphitized mesophase-carbon microbead (MCMB). As the negative electrode active material, an active material including at least one of an element that forms an alloy with Li, such as Si and Sn, and a material containing such an element may be used. A preferable example of this active material is a Si-containing material in which Si fine particles are dispersed in a $SiO_2$ phase, a silicate phase such as lithium silicate, or an amorphous carbon phase. As the negative electrode active material, graphite and the Si-containing material may be used in combination.

For the binder included in the negative electrode mixture layer, a fluororesin, PAN, a polyimide, an acrylic resin, a polyolefin, or the like may be used as in the case of the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), or the like. Among them, SBR; and CMC or a salt thereof, or PAA or a salt thereof are preferably used in combination.

The negative electrode 12 has a coating (hereinafter, which may be referred to as "negative electrode coating") formed on a surface of the negative electrode mixture layer and containing M2. It is considered that the negative electrode coating is formed by depositing M2 in the composite oxide (Z) eluted by charge and discharge on the surface of the negative electrode mixture layer. That is, the negative electrode coating contains M2 derived from the composite oxide (Z). The negative electrode coating is formed by, for example, charge and discharge with less than or equal to 10 cycles. When the negative electrode coating containing a predetermined amount of M2 is formed, the effect of improving the cycle characteristics is obtained. The presence of the negative electrode coating may be confirmed by X-ray photoelectron spectrometry (XPS).

A content rate of M2 in the negative electrode 12 is greater than or equal to 1000 ppm and less than or equal to 10000 ppm relative to a total mass of the negative electrode mixture layer and the negative electrode coating. Here, this content rate of M2 means a content rate in a case of charge and discharge performed under a condition same as in a cycle test described later. If the content rate of M2 is less than 1000 ppm or greater than 10000 ppm, the effect of improving the cycle characteristics cannot be obtained.

The content rate of M2 in the negative electrode 12 varies depending on the composition of the composite oxide (Z), specifically the content rate of M2 in the composite oxide (Z). In other words, the content rate of M2 in the composite oxide (Z) is regulated so that the content rate of M2 in the negative electrode 12 is greater than or equal to 1000 ppm and less than or equal to 10000 ppm. The content rate of M2 in the negative electrode 12 also varies depending on a charge-discharge condition. For example, raising a charge termination voltage and increasing a discharge depth tend to increase the content rate of M2.

The content rate of M2 relative to the total mass of the negative electrode mixture layer and the negative electrode coating may be calculated by the following method. The content rates of M1 and Ni described later may also be calculated by similar methods.

(1) Ion-exchanged water is added into the negative electrode 12 to eliminate the negative electrode mixture layer and the coating from a negative electrode core, and a weight of the negative electrode mixture layer and the coating is measured.

(2) Aqua regia and hydrofluoric acid are added into the eliminated negative electrode mixture layer and coating, the mixture is heated and dissolved, and an insoluble component such as carbon is filtered off to produce an aqueous solution. This aqueous solution is adjusted with ion-exchanged water to a constant volume, and a result of measuring an M2 concentration by ICP-AES is specified as a content of M2 in the negative electrode.

(3) The content of M2 in the negative electrode 12 measured in (2) is divided by the weight of the negative electrode mixture layer and the coating measured in (1) to be specified as the content rate of M2 in the negative electrode 12.

The negative electrode coating may further contain Ni and M1. Ni and M1 contained in the negative electrode coating are Ni and M1 derived from the composite oxide (Z) similarly to M2, and it is considered that Ni and M1 in the composite oxide (Z) eluted by charge and discharge are deposited on the surface of the negative electrode mixture layer together with M2 to form the negative electrode coating.

In the negative electrode 12, a ratio between the content rate of M2 and the content rate of Ni (M2/Ni), namely a mass ratio between M2 and Ni is preferably greater than or equal to 0.3 and less than or equal to 2, and more preferably greater than or equal to 0.3 and less than or equal to 0.8. When the M2/Ni is within this range, the effect of improving the cycle characteristics becomes more remarkable. Here, this M2/Ni means a ratio in a case of charge and discharge performed under a condition same as in a cycle test described later.

The M2/Ni varies depending on the composition of the composite oxide (Z), specifically the mole ratio between M2 and Ni. In other words, the mole ratio between M2 and Ni in the composite oxide (Z) is preferably regulated so that the M2/Ni in the negative electrode 12 is within the above range. Note that the M2/Ni in the negative electrode 12 can rather vary also depending on the charge-discharge condition.

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

EXAMPLES

Hereinafter, the present disclosure will be further described with Examples, but the present disclosure is not limited to these Examples.

<Example 1>

[Synthesis of Lithium-Transition Metal Composite Oxide (Positive Electrode Active Material)]

A composite oxide containing the general formula Ni, Co, and Mn, calcium hydroxide, strontium hydroxide, niobium hydroxide, and titanium oxide were mixed at a predetermined ratio, and then lithium hydroxide was mixed so that a mole ratio between the metal elements and Li in this mixture was 1:1.03. The predetermined ratio was set so that a content rate of Ca was 0.3 mol%, a content rate of Sr was 0.1 mol%, a content rate of Nb was 0.5 mol%, and a content rate of Ti was 1.5 mol% relative to the total number of moles of metal elements excluding Li.

The mixture was fed into a firing furnace, and fired under an oxygen flow with an oxygen concentration of 95% (flow rate of 2 mL/min per 10 $cm^3$ and 5 L/min per kilogram of the mixture) at a temperature-raising rate of 1.0°C/min from room temperature to 650°C. Thereafter, the mixture was fired at a temperature-raising rate of 1.5°C/min from 650°C to 740°C, and then retained for 2 hours. This fired product was washed with water to obtain a lithium-transition metal composite oxide.

The above lithium-transition metal composite oxide was analyzed by ICP-AES, and consequently confirmed that the composition of this composite oxide was $Li_{0.98}Ni_{0.886}Co_{0.05}Mn_{0.05}Ca_{0.003}Sr_{0.001}Nb_{0.005}Ti_{0.005}O_2$. An X-ray diffraction pattern obtained from a powder X-ray diffraction measurement was subjected to Rietveld analysis under the predetermined condition to confirm that a proportion of the transition metal elements present in a Li layer was 4.7 mol% relative to the total number of moles of metal elements excluding Li.

From a sectional SEM image of the above lithium-transition metal composite oxide (secondary particles), an average porosity of the secondary particles was determined by the aforementioned analysis method. The average porosity was 2.5%. By transmission microscope - energy dispersive X-ray spectrometry (TEM-EDX), it was confirmed that Ca and Sr were present on an interface between primary particles inside the secondary particles.

[Production of Positive Electrode]

The above positive electrode active material, acetylene black, and polyvinylidene fluoride were mixed at a mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating was dried and compressed, and then the positive electrode core was cut to a predetermined electrode size to obtain a positive electrode in which a positive electrode mixture layer was formed on both surfaces of the positive electrode core. Note that an exposed portion where the surface of the positive electrode core was exposed was provided on a part of the positive electrode. An amount of the positive electrode active material in the positive electrode mixture layer was 0.49 g.

[Production of Negative Electrode]

As a negative electrode active material, natural graphite was used. The negative electrode active material, sodium carboxymethylcellulose (CMC-Na), and a dispersion of styrene-butadiene rubber (SBR) were mixed at a solid-content mass ratio of 100:1:1, and water was used as a dispersion medium to prepare a negative electrode mixture slurry. This negative electrode mixture slurry was applied on both surfaces of a negative electrode core made of copper foil, the coating was dried, then the coating was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

[Preparation of Non-Aqueous Electrolyte]

Into a mixed solvent in which ethylene carbonate (EC), methyl ethyl carbonate (MEC), and dimethyl carbonate (DMC) were mixed at a volume ratio (25°C) of 3:3:4, $LiPF_6$ was dissolved at a concentration of 1.2 mol/L to prepare a non-aqueous electrolyte liquid.

[Production of Test Cell (Non-Aqueous Electrolyte Secondary Battery)]

An aluminum lead was attached to the exposed portion of the above positive electrode, and a nickel lead was attached to the exposed portion of the above negative electrode. The positive electrode and the negative electrode were spirally wound via a separator made of a polyolefin, and then press-formed in the radial direction to produce a flat and wound electrode assembly. This electrode assembly was housed in an exterior made of an aluminum laminate sheet, the above non-aqueous electrolyte liquid was injected, and then an opening of the exterior was sealed to obtain a test cell A1.
Capacity retention after a cycle test of the above test cell was evaluated by the following method. It was confirmed by XPS that a negative electrode coating was formed on the surface of the negative electrode mixture layer after the cycle test. A content rate of M2 (Nb and Ti in Example 1) and M2/Ni in the negative electrode were determined by the above method using ICP-AES. In Table 1, Examples 1 to 6 were A1 to A6, and Comparative Examples 1 to 5 were B1 to B5. The capacity retention of the test cell described in Table 1 is a value relative to the capacity retention of the test cell of Comparative Example 1 (B1) being 100.

[Evaluation of Capacity Retention after Cycle Test]

Under a temperature environment of 45°C, the test cell was charged at a constant current of 0.5 It until a battery voltage reached 4.3 V, and charged at a constant voltage of 4.3 V until a current value reached 1/50 It. Thereafter, the test cell was discharged at a constant current of 0.5 It until the battery voltage reached 2.5 V. This charge-discharge cycle was repeated with 100 cycles. A discharge capacity at the 1st cycle and a discharge capacity at the 100th cycle in the cycle test were determined, and the capacity retention was calculated by the following formula.

Capacity retention (%) = (Discharge capacity at 100th cycle / Discharge capacity at 1st cycle) $\times$ 100

<Example 2>

A test cell was produced and the performance was evaluated in the same manner as in Example 1 except that a lithium-transition metal composite oxide was synthesized by using calcium hydroxide as the M1 raw material and niobium hydroxide and tungsten oxide as the M2 raw material, and by changing the mixing ratio of the raw materials so as to have the elemental ratio described in Table 1.

<Example 3>

A test cell was produced and the performance was evaluated in the same manner as in Example 1 except that a lithium-transition metal composite oxide was synthesized by using calcium hydroxide as the M1 raw material and tungsten oxide and zirconium oxide as the M2 raw material, and by changing the mixing ratio of the raw materials so as to have the elemental ratio described in Table 1.

<Example 4>

A test cell was produced and the performance was evaluated in the same manner as in Example 1 except that a lithium-transition metal composite oxide was synthesized by using calcium hydroxide as the M1 raw material and tungsten oxide and titanium oxide as the M2 raw material, and by changing the mixing ratio of the raw materials so as to have the elemental ratio described in Table 1.

<Example 5>

A test cell was produced and the performance was evaluated in the same manner as in Example 1 except that a lithium-transition metal composite oxide was synthesized by using calcium hydroxide as the M1 raw material and tungsten oxide as the M2 raw material, and by changing the mixing ratio of the raw materials so as to have the elemental ratio described in Table 1.

<Example 6>

A test cell was produced and the performance was evaluated in the same manner as in Example 1 except that a lithium-transition metal composite oxide was synthesized by using calcium hydroxide as the M1 raw material and niobium oxide as the M2 raw material, and by changing the mixing ratio of the raw materials so as to have the elemental ratio described in Table 1.

<Comparative Example 1>

A test cell was produced and the performance was evaluated in the same manner as in Example 1 except that, in the synthesis of the lithium-transition metal composite oxide, the M1 raw material and the M2 raw material were not used.

<Comparative Example 2>

A test cell was produced and the performance was evaluated in the same manner as in Example 1 except that a lithium-transition metal composite oxide was synthesized by using no M2 raw material and using calcium hydroxide as the M1 raw material, and by changing the mixing ratio of the raw materials so as to have the elemental ratio described in Table 1.

<Comparative Example 3>

A test cell was produced and the performance was evaluated in the same manner as in Example 1 except that a lithium-transition metal composite oxide was synthesized by using no M1 raw material and using niobium hydroxide as the M2 raw material, and by changing the mixing ratio of the raw materials so as to have the elemental ratio described in Table 1.

<Comparative Example 4>

A test cell was produced and the performance was evaluated in the same manner as in Example 1 except that a lithium-transition metal composite oxide was synthesized by using no M2 raw material and using calcium hydroxide as the M1 raw material, and by changing the temperature-raising rate in the second firing step to 0.5°C/m and the holding time at the second set temperature to 16 hours.

<Comparative Example 5>

A test cell was produced and the performance was evaluated in the same manner as in Example 6 except that a lithium-transition metal composite oxide was synthesized by changing the temperature-raising rate in the second firing step to 0.5°C/m and the holding time at the second set temperature to 16 hours.

[Table 1]

| | Positive electrode active material constituent element (mol%) | | | | | Negative electrode coating | | Secondary particles porosity (%) | Metal elements other than Li in Li layer (mol%) | Capacity retention |
|---|---|---|---|---|---|---|---|---|---|---|
| | Ni | Co | Mn | M1 | M2 | M2 (ppm) | M2/Ni | | | |
| A1 | 89.6 | 6 | 3 | Ca:0.3 Sr:0.1 | Nb:0.5 Ti:1.5 | 7623 | 0.35 | 2.5 | 4.7 | 109 |
| A2 | 89.9 | 6 | 3 | Ca:0.3 | Nb:0.4 Zr:0.4 | 3532 | 0.72 | 3.4 | 3.8 | 108 |
| A3 | 90.0 | 6 | 3 | Ca:0.2 | W:0.5 Zr:0.3 | 3304 | 0.63 | 2.6 | 3.5 | 108 |
| A4 | 89.1 | 6 | 3 | Ca:0.4 | W:0.5 Ti:1.0 | 4201 | 0.52 | 4.1 | 4.2 | 107 |
| A5 | 90.3 | 6 | 3 | Ca:0.2 | W:0.5 | 1843 | 0.48 | 2.1 | 4.5 | 106 |
| A6 | 90.4 | 6 | 3 | Ca:0.1 | Nb:0.5 | 2206 | 0.55 | 1.5 | 3.7 | 107 |
| B1 | 91.0 | 6 | 3 | - | - | - | - | 1.1 | 2.6 | 100 |
| B2 | 90.7 | 6 | 3 | Ca:0.3 | - | - | - | 1.0 | 2.7 | 103 |
| B3 | 90.7 | 6 | 3 | - | Nb:0.3 | 960 | 0.18 | 1.2 | 2.5 | 101 |
| B4 | 90.8 | 6 | 3 | Ca:0.2 | - | - | - | 0.7 | 2.6 | 101 |
| B5 | 89.4 | 6 | 3 | Ca:0.1 | Nb:0.5 | 2043 | 0.43 | 0.7 | 3 | 102 |

As shown in Table 1, all the test cells of Examples exhibit high capacity retention after the cycle test and excellent cycle characteristics compared with the test cells of Comparative Examples. From comparison of the results of the test cells of Examples 1 to 6 and Comparative Examples 1 to 3, it is understood that the capacity retention is specifically improved by containing both M1 and M2 compared with the case where the positive electrode active material contains one of M1 and M2. From comparison of the results of Example 6 and Comparative Examples 4 and 5, it is understood that the capacity retention is specifically improved by the average porosity being greater than or equal to 1 and containing both M1 and M2 compared with the case where the average porosity is less than or equal to 1. That is, the charge-discharge cycle characteristics of the battery are remarkably improved with the positive electrode active material having an average porosity of greater than or equal to 1 and containing the predetermined amounts of M1 and M2 and with the negative electrode coating containing the predetermined amount of M2 derived from this positive electrode active material.

The present disclosure will be further described with the following embodiments.

Constitution 1:
A non-aqueous electrolyte secondary battery, comprising:

a positive electrode;
a negative electrode; and
a non-aqueous electrolyte, wherein
the positive electrode includes a lithium-transition metal composite oxide containing Ni, Co, M1 (M1 represents at least one element selected from Ca and Sr), and M2 (M2 represents at least one element selected from Nb, Zr, Ti, W, Al, Mo, Fe, B, P, Mg, and Si),
in the lithium-transition metal composite oxide,
a content rate of Ni is greater than or equal to 80 mol% relative to a total number of moles of metal elements excluding Li,

a content rate of Co is less than or equal to 7 mol% relative to the total number of moles of metal elements excluding Li,

a content rate of M1 is less than or equal to 1 mol% relative to the total number of moles of metal elements excluding Li,

a content rate of M2 is less than or equal to 3 mol% relative to the total number of moles of metal elements excluding Li,

the lithium-transition metal composite oxide is of secondary particles each formed by aggregation of a plurality of primary particles, an average porosity of the secondary particles is greater than or equal to 1% and less than or equal to 5%, and M1 is present on at least an interface between the primary particles inside the secondary particles, and

the negative electrode has: a negative electrode mixture layer including a negative electrode active material; and a coating formed on a surface of the negative electrode mixture layer and containing M2, and a content rate of M2 in the negative electrode is greater than or equal to 1000 ppm and less than or equal to 10000 ppm relative to a total mass of the negative electrode mixture layer and the coating.

Constitution 2:

The non-aqueous electrolyte secondary battery according to Constitution 1, wherein the lithium-transition metal composite oxide contains Mn.

Constitution 3:

The non-aqueous electrolyte secondary battery according to Constitution 1 or 2, wherein, in the lithium-transition metal composite oxide, a proportion of transition metal elements present in a Li layer is greater than or equal to 3 mol% and less than or equal to 7 mol% relative to the total number of moles of metal elements excluding Li.

Constitution 4:

The non-aqueous electrolyte secondary battery according to any one of Constitutions 1 to 3, wherein

the lithium-transition metal composite oxide contains Nb as M2, and

in the lithium-transition metal composite oxide, a content rate of Nb is greater than or equal to 0.35 mol% and less than or equal to 1 mol% relative to the total number of moles of metal elements excluding Li.

Constitution 5:

The non-aqueous electrolyte secondary battery according to any one of Constitutions 1 to 4, wherein, in the lithium-transition metal composite oxide, the content rate of Co is greater than or equal to 2 mol% and less than or equal to 7 mol% relative to the total number of moles of metal elements excluding Li.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

**Claims**

1. A non-aqueous electrolyte secondary battery, comprising:

a positive electrode;

a negative electrode; and

a non-aqueous electrolyte, wherein

the positive electrode includes a lithium-transition metal composite oxide containing Ni, Co, M1 (M1 represents at least one element selected from Ca and Sr), and M2 (M2 represents at least one element selected from Nb, Zr, Ti, W, Al, Mo, Fe, B, P, Mg, and Si),

in the lithium-transition metal composite oxide,

a content rate of Ni is greater than or equal to 80 mol% relative to a total number of moles of metal elements excluding Li,

a content rate of Co is less than or equal to 7 mol% relative to the total number of moles of metal elements excluding Li,

a content rate of M1 is less than or equal to 1 mol% relative to the total number of moles of metal elements excluding Li,

a content rate of M2 is less than or equal to 3 mol% relative to the total number of moles of metal elements excluding Li,

the lithium-transition metal composite oxide is of secondary particles each formed by aggregation of a plurality of primary particles, an average porosity of the secondary particles is greater than or equal to 1% and less than or equal to 5%, and M1 is present on at least an interface between the primary particles inside the secondary particles, and

the negative electrode has: a negative electrode mixture layer including a negative electrode active material; and a coating formed on a surface of the negative electrode mixture layer and containing M2, and a content rate of M2 in the negative electrode is greater than or equal to 1000 ppm and less than or equal to 10000 ppm relative to a total mass of the negative electrode mixture layer and the coating.

2. The non-aqueous electrolyte secondary battery according to claim 1, wherein the lithium-transition metal composite oxide contains Mn.

3. The non-aqueous electrolyte secondary battery according to claim 1, wherein, in the lithium-transition metal composite oxide, a proportion of transition metal elements present in a Li layer is greater than or equal to 3 mol% and less than or equal to 7 mol% relative to the total number of moles of metal elements excluding Li.

4. The non-aqueous electrolyte secondary battery according to claim 1, wherein

the lithium-transition metal composite oxide contains Nb as M2, and
in the lithium-transition metal composite oxide, a content rate of Nb is greater than or equal to 0.35 mol% and less than or equal to 1 mol% relative to the total number of moles of metal elements excluding Li.

5. The non-aqueous electrolyte secondary battery according to claim 1, wherein, in the lithium-transition metal composite oxide, the content rate of Co is greater than or equal to 2 mol% and less than or equal to 7 mol% relative to the total number of moles of metal elements excluding Li.

# Figure 1

## INTERNATIONAL SEARCH REPORT

International application No.

**PCT/JP2023/021476**

### A. CLASSIFICATION OF SUBJECT MATTER

***H01M 4/525***(2010.01)i; ***H01M 4/13***(2010.01)i; ***H01M 4/36***(2006.01)i; ***H01M 4/505***(2010.01)i; ***H01M 10/052***(2010.01)i
FI:  H01M4/525; H01M4/13; H01M4/36 C; H01M4/505; H01M10/052

According to International Patent Classification (IPC) or to both national classification and IPC

### B. FIELDS SEARCHED

Minimum documentation searched (classification system followed by classification symbols)

H01M4/525; H01M4/13; H01M4/36; H01M4/505; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/130982 A1 (PANASONIC IP MAN CO LTD) 23 June 2022 (2022-06-23)<br>entire text, all drawings | 1-5 |
| A | WO 2017/073682 A1 (SUMITOMO METAL MINING CO) 04 May 2017 (2017-05-04)<br>entire text, all drawings | 1-5 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 July 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021476**

| Patent document cited in search report | | | Publication date (day/month/year) | Patent family member(s) | | | Publication date (day/month/year) |
|---|---|---|---|---|---|---|---|
| WO | 2022/130982 | A1 | 23 June 2022 | (Family: none) | | | |
| WO | 2017/073682 | A1 | 04 May 2017 | US | 2019/0020023 | A1 | |
| | | | | entire text, all drawings | | | |
| | | | | CN | 108352527 | A | |

Form PCT/ISA/210 (patent family annex) (January 2015)

**EP 4 550 460 A1**

**Patent documents cited in the description**

- JP 2006310181 A

- JP 2009289726 A